# DEMANDE DE BREVET EUROPEEN

(11) **EP 2 348 211 A1**
(43) Date de publication de la demande: **27.07.2011**
(21) Numéro de dépôt: 11151868.4
(22) Date de dépôt: 24.01.2011
(51) Int. Cl.: F02C 7/14, F02K 3/02

(54) **Propulseur à turbomachine pour aéronef avec refroidisseur instalé dans la nacelle**

(30) Priorité: 26.01.2010 FR 1050508
(71) Demandeur: Airbus Operations (S.A.S.), 31060 Toulouse (FR)
(72) Inventeur: Rinjonneau, Christelle, 31300, Toulouse (FR); Guillaume, Pierre, 31200, Toulouse (FR)
(74) Mandataire: Fourcade, Emmanuelle

(57) **Abrégé**

L'invention concerne un propulseur (1) pour aéronef comportant une turbomachine (8) logée dans une nacelle (10) et un refroidisseur (14) apte à être traversé par un fluide chaud destiné à être refroidi par échange thermique avec un air froid externe audit refroidisseur. Le propulseur (1) comporte une veine d'air (13)(13b) apte à conduire un air pressurisé vers un conduit d'air (20) réalisé entre une paroi externe (6) et une paroi interne (60) de la nacelle (10). Le refroidisseur (14) comporte un premier moyen de refroidissement, dit premier moyen de refroidissement surfacique (145), sur une première face (141) disposée au niveau de la paroi externe (6) de la nacelle (10) du propulseur et un second moyen de refroidissement surfacique (146) sur une seconde face (142) disposée au niveau d'une paroi (23) du conduit d'air (20). L'invention concerne également un aéronef muni d'un tel propulseur.

## Description

La présente invention concerne un propulseur d'aéronef de type à turbomachine. Plus précisément, l'invention concerne un dispositif de refroidissement pour propulseur.

Dans le domaine aéronautique, un grand nombre de propulseurs d'aéronefs comportent une turbomachine, logée dans une nacelle.

On peut citer le cas, par exemple, des propulseurs de type turbofan pour lesquels la turbomachine entraîne au moins un rotor situé à l'intérieur de la nacelle. On peut aussi citer le cas des propulseurs de type « propfan » ou « open rotor » pour lesquels la turbomachine entraîne deux rotors contrarotatifs, les deux rotors étant situés à l'extérieur de la nacelle, en aval ou en amont de la turbomachine.

Quelque soit le type de propulseurs, une boite de vitesse (engrenage entre l'axe de la turbomachine et les rotors) transmet l'énergie mécanique générée par la turbomachine vers les rotors.

Bien que dotée d'un rendement très élevé, cette boîte de vitesse dissipe en chaleur par friction une partie de l'énergie créée par le propulseur. Cette chaleur est en particulier transmise au liquide de lubrification de la boîte de vitesse.

Par ailleurs, la turbomachine elle-même génère une forte dissipation thermique majoritairement par friction mécanique, également au travers de son liquide de lubrification.

On comprend que cette chaleur doit être dissipée vers l'environnement extérieur pour refroidir le propulseur.

Des équipements montés sur la turbomachine, comme un générateur électrique, peuvent également nécessiter un refroidissement.

Diverses solutions ont été développées pour procéder à ce refroidissement.

Une première solution connue, principalement pour les propulseurs de type turbofan, consiste à installer un échangeur thermique dit volumique entre une paroi externe et une paroi interne de la nacelle. Une entrée d'air prélève de l'air froid dans le flux d'air froid traversant la turbomachine, pour l'amener à l'intérieur dudit échangeur volumique. Après avoir traversé la matrice de l'échangeur thermique, l'air est éjecté à l'extérieur de la nacelle par une sortie d'air. De tels échangeurs thermiques ne se révèlent pas être une solution optimale en terme de rendement propulsif et d'impact aérodynamique sur la turbomachine. En effet, le prélèvement d'air constitue une perte directe de rendement propulsif dans la mesure où il ne contribue pas ou peu à la poussée du moteur. Par ailleurs, la présence d'une entrée d'air, d'un ou plusieurs conduits internes, ainsi qu'une sortie d'air engendre des pertes de charges et perturbe de façon plus ou moins significative l'écoulement interne du propulseur.

Une autre solution connue consiste à utiliser un échangeur dit surfacique, tel que par exemple un échangeur à plaques. On connaît notamment un échangeur surfacique épousant localement la forme d'une paroi interne de la nacelle ou du carter moteur à laquelle elle est accolée. Une première face de l'échangeur surfacique est accolée à la paroi interne de la nacelle ou au carter moteur, tandis qu'une seconde face est située dans le flux d'air froid qui traverse le volume interne de la nacelle. La chaleur transportée au sein de l'échangeur est transférée par conduction thermique à la surface interne de la plaque formant la face inférieure de l'échangeur à plaques. Cette plaque chaude est balayée par le flux d'air froid s'écoulant dans la nacelle. La chaleur emmagasinée dans la plaque chaude sur la surface interne est ainsi dissipée par convection forcée vers l'écoulement aérodynamique du propulseur.

Cette solution a toujours un impact aérodynamique mais présente l'avantage, par rapport à la solution précédente, de ne pas prélever d'air dans le flux d'air traversant la turbomachine.

Cette solution ne peut cependant pas être transposable aux propulseurs de type propfan. En effet, lorsque l'aéronef est à vitesse faible ou nulle, il n'y a pas ou peu de flux d'air balayant l'échangeur surfacique, vu que les rotors sont à l'extérieur de la nacelle.

Dans le cas de propulseur propfan, l'échangeur thermique surfacique ne peut être positionné que sur la paroi extérieure de la nacelle ou le mât d'accrochage du propulseur.

L'objectif de cette invention est alors de proposer un propulseur comportant un dispositif de refroidissement de la turbomachine qui pallie aux inconvénients précités en assurant un niveau de refroidissement suffisant au sol et en vol tout en limitant l'impact aérodynamique pendant les phases de vol.

A cet effet, l'invention vise un propulseur pour aéronef comportant une turbomachine logée dans une nacelle et un refroidisseur apte à être traversé par un fluide chaud destiné à être refroidi par échange thermique avec un air froid externe au refroidisseur. Le propulseur comporte au moins une veine d'air apte à conduire un air pressurisé vers un conduit d'air réalisé entre une paroi externe et une paroi interne de la nacelle, et le refroidisseur comporte :
- un premier moyen de refroidissement, dit premier moyen de refroidissement surfacique, sur une première face, dite face externe, disposée au niveau de la paroi externe de la nacelle du propulseur,
- un second moyen de refroidissement, dit second moyen de refroidissement surfacique, sur une seconde face, dite face interne, disposée au niveau d'une paroi du conduit d'air.

En d'autres termes, le refroidisseur est destiné à fonctionner pendant toutes les phases de pilotage d'un aéronef : d'une part, lorsque l'aéronef est à vitesse nulle ou faible et d'autre part, lorsque l'aéronef est en vol.

Préférentiellement, le premier moyen de refroidissement surfacique est dimensionné de manière à suffire à assurer le refroidissement souhaité lorsque l'aéronef est en vol, dans des conditions d'environnement et de vitesse préalablement choisies, et le second moyen de refroidissement surfacique est dimensionné de manière à suffire à assurer le refroidissement souhaité lorsque l'aéronef est à vitesse nulle ou faible, dans des conditions d'environnement préalablement choisies.

Dans toute la description, le terme amont désignera, en un point considéré, la partie qui est située avant ce point, par référence au sens de circulation de l'air dans le propulseur, et le terme aval désignera la partie qui est située après ce point.

Selon un premier mode de réalisation de l'invention, une prise d'air est disposée au niveau d'un 1^{er} étage d'un compresseur d'air de la turbomachine et la veine d'air associée est débouchante en amont du refroidisseur.

Selon un autre mode de réalisation de l'invention, une prise d'air pressurisé est disposée en aval d'un compresseur d'air de la turbomachine et la veine d'air associée est débouchante en aval du refroidisseur afin de créer une aspiration à travers celui-ci.

Avantageusement, la veine d'air comporte, au niveau du conduit d'air 20, un tuyau de faible diamètre, ou éjecteur, qui éjecte de l'air sous pression dans ledit conduit d'air.

Selon un autre mode de réalisation de l'invention, le propulseur comporte deux veines d'air et une vanne de régulation associée à chaque veine, une veine d'air débouchante en amont du refroidisseur et une veine d'air débouchante en aval du refroidisseur, les vannes de régulation régulant l'entrée d'air pressurisé suivant l'une ou l'autre veine.

Dans un mode de réalisation du refroidisseur, au moins un parmi les premier et second moyens de refroidissement surfacique est un ensemble d'ailettes s'étendant à partir de la face externe, et orientées principalement parallèlement au sens d'écoulement de l'air.

Dans un autre mode de réalisation, les premier et second moyens de refroidissement surfacique sont d'architecture similaire.

Alternativement, le conduit d'air comporte une entrée d'air disposée à l'avant du propulseur de sorte à créer une entrée d'air additionnelle.

L'invention vise également un aéronef comportant un propulseur tel qu'exposé.

La description qui va suivre, donnée uniquement à titre d'exemple d'un mode de réalisation de l'invention, est faite en se référant aux figures annexées dans lesquelles :
la figure 1 montre un propulseur de type dit "Propfan", auquel l'invention peut être appliquée,
la figure 2 illustre en vue en coupe très schématisée un tel propulseur,
la figure 3 est une vue de détail de la figure 2, centrée sur la partie avant du propulseur, et qui met en évidence les éléments principaux du dispositif de refroidissement selon un premier mode de réalisation de l'invention,
la figure 4 illustre de façon schématique les données traitées par l'électronique de contrôle du dispositif de refroidissement selon l'invention,
la figure 5a illustre sur une vue de détail la circulation de l'air dans le refroidisseur lorsque l'aéronef est à basse vitesse, pour le premier mode de réalisation de l'invention,
la figure 5b illustre sur une vue de détail la circulation de l'air dans le refroidisseur lorsque l'aéronef est en vol, pour le premier mode de réalisation de l'invention,
la figure 6a illustre sur une vue de détail la circulation de l'air dans le refroidisseur lorsque l'aéronef est à basse vitesse, selon une variante du premier mode de réalisation de l'invention,
la figure 6b illustre sur une vue de détail la circulation de l'air dans le refroidisseur lorsque l'aéronef est en vol, selon une variante du premier mode de réalisation de l'invention,
la figure 7a est une vue de détail de la figure 2, centrée sur la partie avant du propulseur, et qui met en évidence les éléments principaux du dispositif de refroidissement selon un deuxième mode de réalisation de l'invention,
la figure 7b illustre sur une vue de détail la circulation de l'air dans le refroidisseur lorsque l'aéronef est à basse vitesse, pour le deuxième mode de réalisation de l'invention,
la figure 7c illustre sur une vue de détail la circulation de l'air dans le refroidisseur lorsque l'aéronef est en vol, pour le deuxième mode de réalisation de l'invention,
la figure 8a est une vue de détail de la figure 2, centrée sur la partie avant du propulseur, et qui met en évidence les éléments principaux du dispositif de refroidissement selon un troisième mode de réalisation de l'invention,
la figure 8b illustre sur une vue de détail un premier exemple de circulation de l'air dans le refroidisseur lorsque l'aéronef est à basse vitesse, pour le troisième mode de réalisation de l'invention,
la figure 8c illustre sur une vue de détail un deuxième exemple circulation de l'air dans le refroidisseur lorsque l'aéronef est à basse vitesse, pour le troisième mode de réalisation de l'invention,
la figure 8d illustre sur une vue de détail la circulation de l'air dans le refroidisseur lorsque l'aéronef est en vol, pour le troisième mode de réalisation de l'invention,
la figure 9a illustre sur une vue de détail la circulation de l'air dans le refroidisseur lorsque l'aéronef est à basse vitesse, selon une variante du troisième mode de réalisation de l'invention,
la figure 9b illustre sur une vue de détail la circulation de l'air dans le refroidisseur lorsque l'aéronef est en vol, selon une variante du troisième mode de réalisation de l'invention.

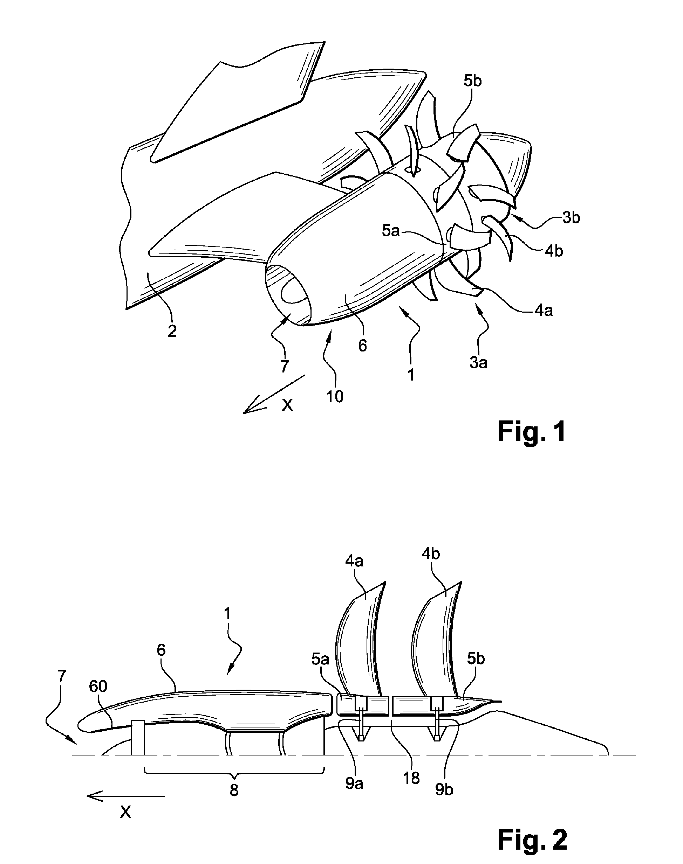

L'invention concerne un propulseur 1 d'aéronef, par exemple de type dit "propfan", tel qu'illustré figure 1. De tels propulseurs sont envisagés pour des aéronefs futurs. Dans l'exemple de mise en oeuvre illustré ici, deux propulseurs propfan 1, logés chacun dans une nacelle 10, sont fixés, par des mâts de support, de part et d'autre d'un fuselage 2 d'un aéronef.

Chaque propulseur propfan 1 comporte ici deux rotors contrarotatifs 3a, 3b comportant chacun un ensemble de pales 4a, 4b équidistantes, et disposés en partie arrière du propulseur 1. Les pales 4a, 4b de chaque rotor 3a, 3b font saillie d'une couronne annulaire 5a, 5b mobile avec ce rotor, dont une surface externe se place dans la continuité d'une paroi externe 6 de la nacelle du propulseur.

Comme on le voit sur la figure 2 de façon schématique, le propulseur propfan 1 comporte une entrée d'air 7 qui alimente une turbomachine 8. Cette turbomachine 8 comporte une partie axiale entraînée en rotation lorsque la turbomachine est en fonctionnement. Cet axe entraîne à son tour, par l'intermédiaire de transmissions mécaniques non illustrées figure 2, les axes 9a, 9b des pales 4a, 4b des deux rotors contrarotatifs 3a, 3b.

Les gaz chauds générés par la turbomachine 8 lors de son fonctionnement sont évacués par une veine chaude annulaire 18 présentant une sortie située à l'arrière des deux rotors 3a, 3b. Dans une variante, ces gaz peuvent également être évacués en amont des deux rotors.

La turbomachine 8 comporte, de façon classique, un compresseur à plusieurs étages permettant des augmentations incrémentales de pression de l'air entrant dans la turbomachine.

Les détails de réalisation des propulseurs propfan et de leurs composants : rotors, turbomachine, transmission, ainsi que leurs dimensions, matériaux etc. sortent du cadre de la présente invention. Les éléments décrits ici ne sont donc donnés qu'à titre informatif facilitant la compréhension de l'invention dans un de ses exemples, nullement limitatif, de mise en oeuvre.

Lors du vol de l'aéronef, l'air extérieur, dont la température est comprise entre +55°C à proximité immédiate du sol et -74°C en altitude, vient circuler le long de la paroi externe 6 de la nacelle 10 du propulseur, sensiblement selon la direction opposée à un axe longitudinal X de déplacement de l'aéronef.

Dans le même temps, le propulseur génère une réjection thermique significative, dont une partie est évacuée par la veine chaude annulaire 18, et une autre partie, transmise aux circuits d'huile du moteur et de la boîte de vitesse, doit être évacuée par un dispositif de refroidissement approprié.

### Description générale

Le dispositif de refroidissement comporte, entre la paroi externe 6 et un conduit d'air 20 réalisé entre la paroi externe 6 et une paroi interne 60 de la nacelle 10, un refroidisseur 14.

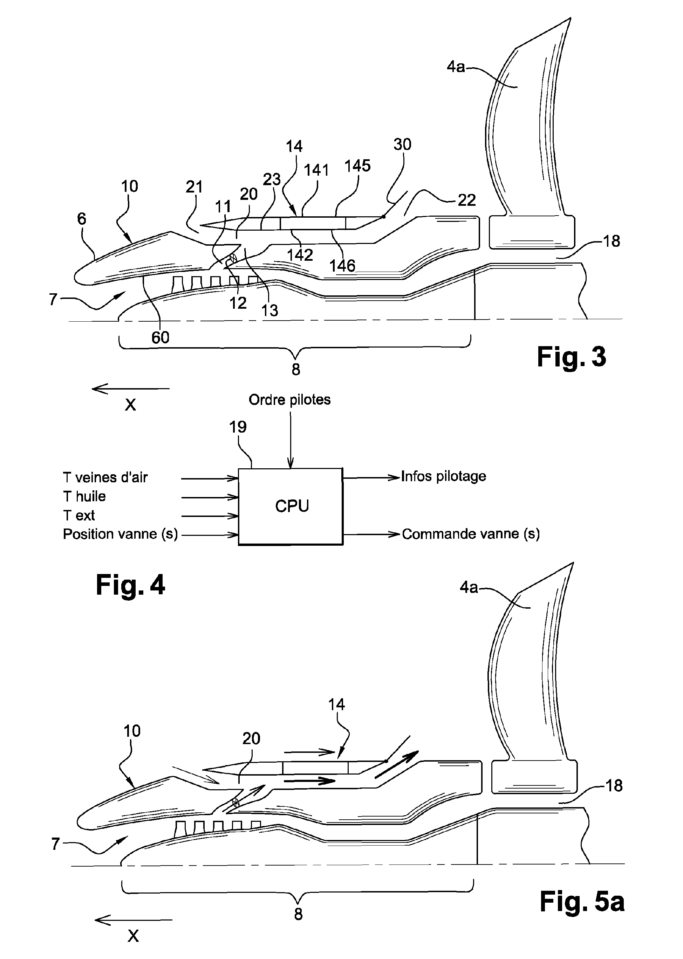

Comme illustré sur les figures 2 et 3 par exemple, la paroi interne 60 est la paroi située en vis-à-vis de la turbomachine, dans un volume interne de la nacelle 10, et la paroi externe 6 est la paroi balayée par le flux d'air extérieur.

Dans un mode de réalisation du conduit d'air, comme illustré sur la figure 3, le conduit d'air 20 est d'une part, débouchant à l'avant de la nacelle du propulseur, par une entrée d'air 21, à proximité de l'entrée d'air principale 7, et d'autre part débouchant à l'extérieur de la nacelle, par une sortie d'air 22, en amont des rotors.

Le refroidisseur 14 est destiné à fonctionner dans deux modes d'échange de chaleur principaux :
- l'un au sol, ou au décollage, lorsque le flux d'air extérieur est faible ou nul,
- l'autre en vol, lorsque le flux d'air extérieur est significatif.

Le refroidisseur 14 comporte sur une première face, dite face externe 141, disposée au niveau de la paroi externe 6 de la nacelle 10 du propulseur, un premier moyen de refroidissement surfacique 145. Il comporte sur une seconde face opposée à la face externe, dite face interne 142, disposée au niveau d'une paroi 23 du conduit d'air 20, un second moyen de refroidissement surfacique 146.

Le premier moyen de refroidissement surfacique 145 forme ainsi une partie de la paroi externe 6 de la nacelle 10 du propulseur. La forme du premier moyen de refroidissement surfacique 145 est déterminée par la forme de la paroi externe 6 de la nacelle 10 du propulseur à l'endroit où le refroidisseur 14 doit être installé.

Le second moyen de refroidissement surfacique 146 forme une partie de la paroi 23 du conduit d'air 20. La forme du second moyen de refroidissement surfacique 146 est déterminée par la forme de la paroi 23 du conduit d'air à l'endroit où le refroidisseur 14 doit être installé.

La face interne 142 du refroidisseur 14 est, dans le présent exemple non limitatif de l'invention, sensiblement parallèle à la face externe 141.

Les dimensions du premier 145, respectivement second 146, moyen de refroidissement surfacique sont déterminées par le besoin de refroidissement lorsque l'aéronef est en vol, respectivement au sol ou à faible vitesse, par le flux d'air pressurisé froid disponible.

Le calcul en lui-même est connu de l'homme de l'art et n'est donc pas détaillé plus avant ici.

Dans un exemple de réalisation des premier et ou second moyens de refroidissement surfacique, le premier moyen de refroidissement surfacique comporte un ensemble d'ailettes (non représenté sur les figures) partant de la face externe, du refroidisseur et formant saillie sur la face externe du refroidisseur.

Dans un autre exemple de réalisation des premier et ou second moyens de refroidissement surfacique, le second moyen de refroidissement surfacique comporte un ensemble d'ailettes (non représenté sur les figures) partant de la face interne, du refroidisseur et formant saillie sur la face interne du refroidisseur.

Par exemple, ces ailettes permettent d'augmenter la surface d'échange, et sont orientées sensiblement parallèlement aux lignes d'écoulement d'un flux d'air circulant sur la face externe (interne) du refroidisseur lorsque l'aéronef est en vol (à basse vitesse), c'est à dire sensiblement selon l'axe longitudinal X.

Les dimensions de ces ailettes sont déterminées par le besoin de refroidissement lorsque l'aéronef est en vol ou à basse vitesse, et par le flux d'air extérieur et la température de l'air circulant le long de la surface de ces ailettes. Le détail d'un tel calcul est connu de l'homme de l'art.

Ces moyens de refroidissement 145, 146 sont connus de l'homme de l'art et ne seront pas développés plus avant ici.

Dans un mode de réalisation du refroidisseur 14, lesdits premier et second moyens de refroidissement surfacique sont identiques.

Dans un mode préféré de réalisation du refroidisseur, le premier moyen de refroidissement 145 ne comporte pas d'ailettes sur la face externe 141 du refroidisseur 14 et le second moyen de refroidissement surfacique 145 comporte des ailettes sur la face interne 142 du refroidisseur 14.

Le dispositif de refroidissement est piloté par une électronique de contrôle 19, (illustrée figure 4), de type connu en soi.

Ladite électronique de contrôle 19 reçoit en entrée, dans le présent exemple nullement limitatif, des données de température des circuits d'huile que le dispositif de refroidissement doit réguler, ainsi que des données de température d'air extérieur.

Ladite électronique de contrôle 19 émet des données de contrôle, par exemple température des circuits d'huile, vers le poste de pilotage de l'appareil, dont elle reçoit également des instructions.

Cette électronique de contrôle 19 peut être installée au niveau du propulseur, à proximité immédiate du refroidisseur 14. Alternativement, l'électronique de contrôle 19 peut faire partie des divers équipements électroniques situés dans le poste de pilotage, ou être simplement une des fonctions gérées par un des calculateurs multifonctions usuellement présents à bord des aéronefs.

Dans une variante de réalisation de l'invention, le conduit d'air 20 comporte, au niveau de la sortie d'air 22, un moyen de fermeture 30 de ladite sortie. Ce moyen de fermeture est commandé par l'électronique de contrôle 19.

Dans un exemple de réalisation, le moyen de fermeture 30 est un clapet.

### Premier mode de réalisation

Dans un premier mode de réalisation du dispositif de refroidissement, ledit dispositif de refroidissement, comme illustré sur la figure 3, tire parti de la présence du compresseur, et comporte une prise d'air 11, de type connu en soi, disposée, dans le présent exemple non limitatif, au niveau du premier étage du compresseur de la turbomachine 8. Cette disposition est destinée à fournir un air encore peu réchauffé par la compression, au contraire de l'air situé au niveau des étages suivants du compresseur.

La position du point de prélèvement dépend naturellement des caractéristiques spécifiques de la turbomachine 8 considérée, et de son compresseur, mais cette position est dictée par le besoin d'air à une pression suffisante pour amener un flux d'air prédéterminé vers un refroidisseur, et à une température suffisamment basse, tout en ne perturbant pas le fonctionnement correct du compresseur et plus généralement de la turbomachine 8.

De préférence, cette prise d'air 11 comporte une vanne de régulation 12, ici illustrée de façon schématique, adaptée à piloter le flux d'air pressurisé, prélevé au niveau de la prise d'air 11, entre une valeur quasiment nulle et une valeur maximale déterminée en fonction du besoin de refroidissement de l'huile de la boîte de vitesse et/ou du moteur et/ou du générateur électrique.

Une veine d'air 13 disposée en aval de la vanne de régulation 12 conduit le flux d'air pressurisé prélevé en amont du refroidisseur 14, vers le conduit d'air 20.

L'électronique de contrôle 19 contrôle la vanne de régulation 12 selon diverses informations d'entrée. Elle reçoit des données de température d'air dans la veine d'air 13 ainsi que des informations d'état de la vanne de régulation 12.

En fonctionnement lorsque l'aéronef est au sol (figure 5a), ou dans les phases de roulage, de décollage ou d'approche, avec les propulseurs en marche, les réjections thermiques du générateur électrique sont très importantes et la vitesse de l'aéronef faible ou nulle.

Durant ces phases, dites phases basses vitesses, le flux d'air extérieur est faible, et insuffisant pour un refroidissement par les deux moyens de refroidissement surfacique 145, 146. L'électronique de commande 19 pilote donc la vanne de régulation 12 en position d'ouverture sensiblement maximale, permettant au second moyen de refroidissement 146 d'être parcouru par l'air extérieur et par l'air pressurisé prélevé au niveau du compresseur. Le refroidissement est fait principalement par le second moyen de refroidissement 146.

Ceci assure ainsi un échange thermique entre le refroidisseur 14 chaud et l'air pressurisé froid, provoquant le refroidissement souhaité du refroidisseur et des fluides circulant à l'intérieur ou reliés à lui par conduction thermique.

Au fur et à mesure de la montée et de l'évolution vers le vol en palier, la vitesse de l'aéronef augmente et la température extérieure de l'air diminue. En conséquence, le prélèvement d'air au niveau du compresseur est réduit par une fermeture progressive de la vanne de régulation 12 commandée par l'électronique de contrôle 19, et le refroidissement se fait de plus en plus d'une part par le premier moyen de refroidissement surfacique 145 balayé par l'air extérieur et d'autre part par le second moyen de refroidissement surfacique 146 balayé par l'air extérieur circulant naturellement dans le conduit d'air 20.

La fermeture (par extension l'ouverture) de la vanne 12 est décrite pour être progressive mais il est également possible que la fermeture (par extension l'ouverture) soit commandée en tout ou rien.

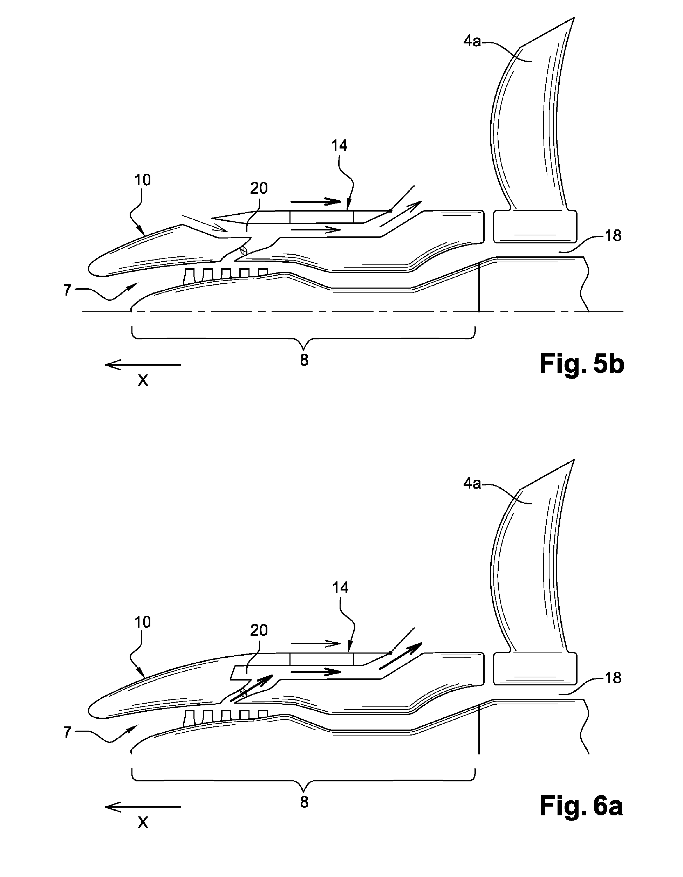

Par la suite, lorsque l'aéronef est en vol stabilisé (figure 5b), le refroidissement est fait normalement par les premier et second moyen de refroidissement 145, 146 du refroidisseur 14, principalement par le premier moyen de refroidissement 145, et la vanne de régulation 12 reste alors fermée, ce qui supprime le prélèvement d'air sur le compresseur, et réduit donc la surconsommation de carburant qu'entraîne autrement ce prélèvement de puissance.

Dans une variante de réalisation, lorsque le conduit d'air 20 comporte un moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

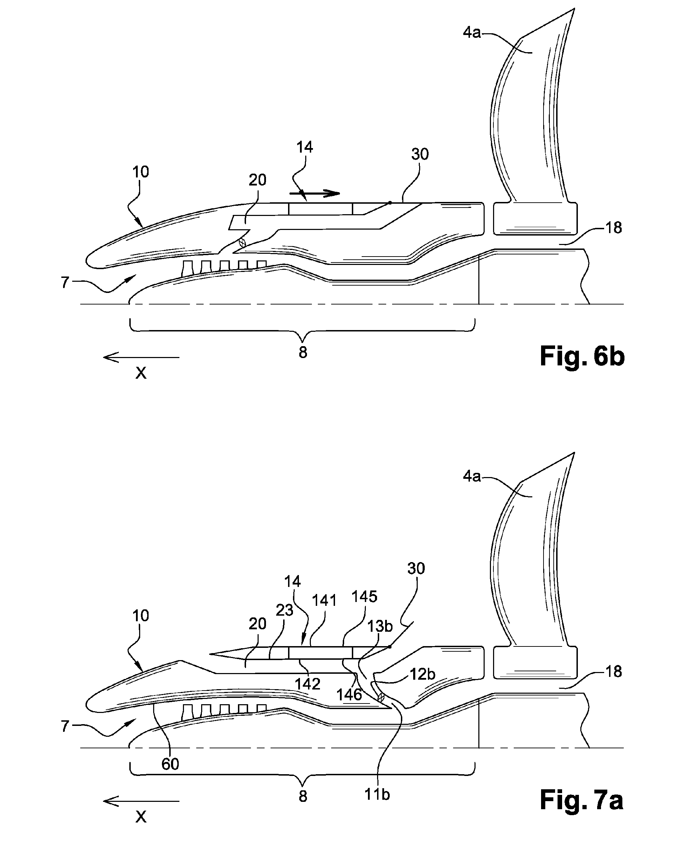

Dans une variante de réalisation, comme illustré sur les figures 6a et 6b, le conduit d'air 20 est non débouchant, par exemple au moyen d'un moyen de fermeture de l'entrée d'air, vers l'avant de la nacelle 10, de sorte à réduire la traînée aérodynamique induite par l'entrée d'air.

Durant les phases basses vitesses (figure 6a), l'électronique de commande 19 pilote la vanne de régulation 12 en position d'ouverture sensiblement maximale et l'air froid pressurisé circule dans le conduit d'air 20. Les premier et second moyens de refroidissement sont fonctionnels. Lorsque le conduit d'air 20 comporte en outre un moyen de fermeture de la sortie d'air 22, ledit moyen de fermeture est en position d'ouverture.

Durant la phase de vol (figure 6b), l'électronique de commande 19 pilote la vanne de régulation 12, en position de fermeture et le refroidissement est réalisé seulement par le premier moyen de refroidissement surfacique 145. Lorsque le conduit d'air 20 comporte en outre un moyen de fermeture de la sortie d'air 22, ledit moyen de fermeture est de préférence en position de fermeture.

### Deuxième mode de réalisation

Dans un deuxième mode de réalisation du dispositif de refroidissement, ledit dispositif de refroidissement, comme illustré sur les figures 7a à 7c, comporte une prise d'air 11 b, de type connu en soi, disposée, dans le présent exemple non limitatif, en aval du compresseur de la turbomachine 8.

De préférence, cette prise d'air 11 b comporte une vanne de régulation 12b, ici illustrée de façon schématique, adaptée à piloter le flux d'air pressurisé, prélevé au niveau de la prise d'air 11 b, entre une valeur quasiment nulle et une valeur maximale déterminée en fonction du besoin de refroidissement de l'huile de la boîte de vitesse et / ou du moteur et/ou du générateur électrique.

Une veine d'air 13b disposée en aval de la vanne de régulation 12b conduit le flux d'air pressurisé prélevé vers le conduit d'air 20 réalisé dans la nacelle, en aval du refroidisseur 14, et crée une aspiration de l'air extérieur issu de l'entrée d'air 21 dans le conduit d'air, parcourant le second moyen de refroidissement 146.

Avantageusement, la veine d'air 13b se termine, au niveau du conduit d'air 20, par un tuyau de faible diamètre, ou éjecteur, qui éjecte de l'air sous pression dans le conduit d'air 20. L'éjection de l'air sous pression produit une accélération du flux d'air externe provenant du conduit d'air 20 par une phénomène d'aspiration et par conséquent une augmentation du débit d'air parcourant le second moyen de refroidissement 146.

Dans ce deuxième mode de réalisation, l'électronique de contrôle 19 contrôle la vanne de régulation 12b selon diverses informations d'entrée. Elle reçoit des données de température d'air dans la veine d'air 13b ainsi que des informations d'état de la vanne de régulation 12b.

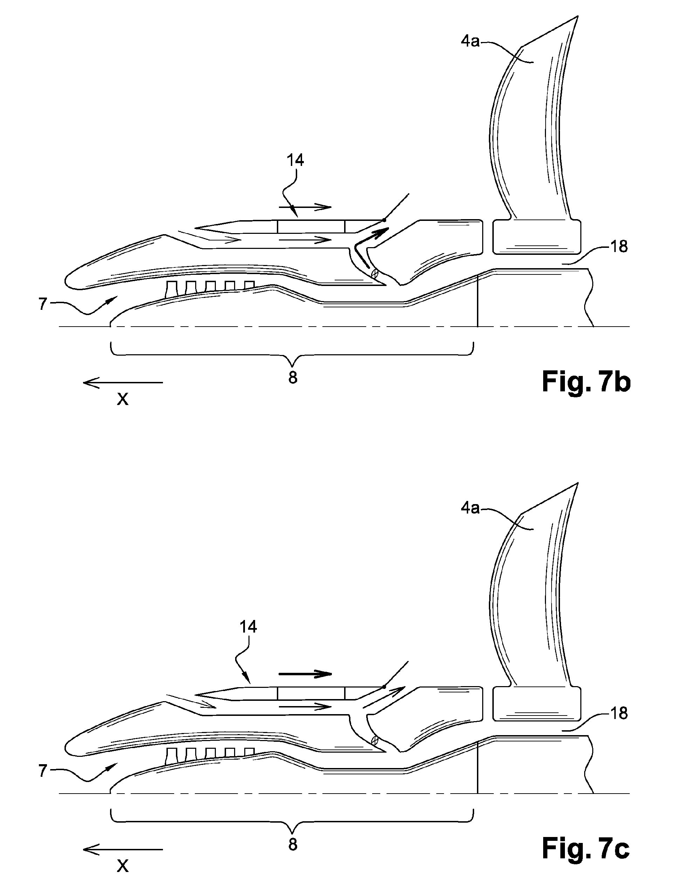

En fonctionnement lorsque l'aéronef est en phase basses vitesses (figure 7b), les réjections thermiques du générateur électrique sont très importantes et la vitesse de l'aéronef faible ou nulle.

Durant ces phases basses vitesses, le flux d'air extérieur est faible, et insuffisant pour un refroidissement par les deux moyens de refroidissement surfacique 145, 146. L'électronique de commande 19 pilote donc la vanne de régulation 12b, en position d'ouverture sensiblement maximale, permettant de créer une aspiration de l'air extérieur en sortie du conduit d'air. Le refroidissement est fait principalement par le second moyen de refroidissement 146.

Ceci assure ainsi un échange thermique entre le refroidisseur 14 chaud et l'air pressurisé froid, provoquant le refroidissement souhaité du refroidisseur et des fluides circulant à l'intérieur ou reliés à lui par conduction thermique.

Au fur et à mesure de la montée et de l'évolution vers le vol en palier, la vitesse de l'aéronef augmente et la température extérieure de l'air diminue. En conséquence, le prélèvement d'air au niveau du compresseur est réduit par une fermeture progressive de la vanne de régulation 12b commandée par l'électronique de contrôle 19, et le refroidissement se fait de plus en plus d'une part par le premier moyen de refroidissement surfacique 145 balayé par l'air extérieur et d'autre part par le second moyen de refroidissement surfacique 146 balayé par l'air extérieur circulant naturellement dans le conduit d'air 20.

La fermeture (par extension l'ouverture) de la vanne 12b est décrite pour être progressive mais il est également possible que la fermeture (par extension l'ouverture) soit commandée en tout ou rien.

Par la suite, lorsque l'aéronef est en vol stabilisé (figure 7c), le refroidissement est fait normalement par les premier et second moyen de refroidissement 145, 146 du refroidisseur 14, principalement par le premier moyen de refroidissement 145, et la vanne de régulation 12b reste alors fermée, ce qui supprime le prélèvement d'air sur le compresseur, et réduit donc la surconsommation de carburant qu'entraîne autrement ce prélèvement de puissance.

Dans une variante de réalisation, lorsque le conduit d'air 20 comporte un moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

### Troisième mode de réalisation

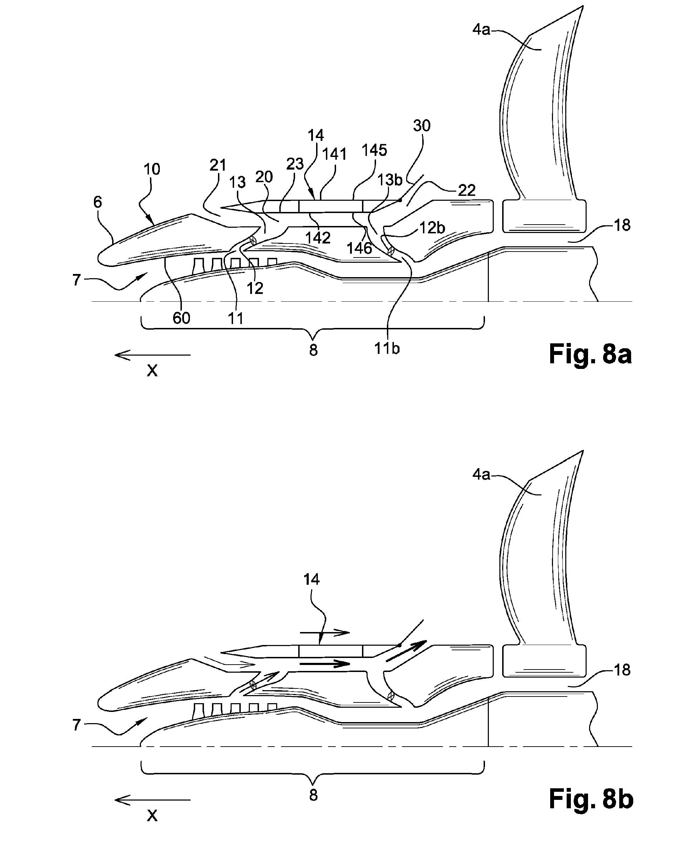

Dans un troisième mode de réalisation du dispositif de refroidissement, le dispositif de refroidissement, comme illustré sur les figures 8a à 8d, comporte la prise d'air 11, la vanne de régulation 12 et la veine d'air 13, telles que décrites dans le premier mode de réalisation.

Le dispositif de refroidissement comporte en outre la prise d'air 11 b, la vanne de régulation 12b et la veine d'air 13b telles que décrites dans le deuxième mode de réalisation.

Avantageusement, la veine d'air 13b se termine, au niveau du conduit d'air 20, par un éjecteur, qui éjecte de l'air sous pression dans le conduit d'air 20.

Dans ce troisième mode de réalisation, l'électronique de contrôle 19 contrôle les vannes de régulation 12 et 12b selon diverses informations d'entrée.

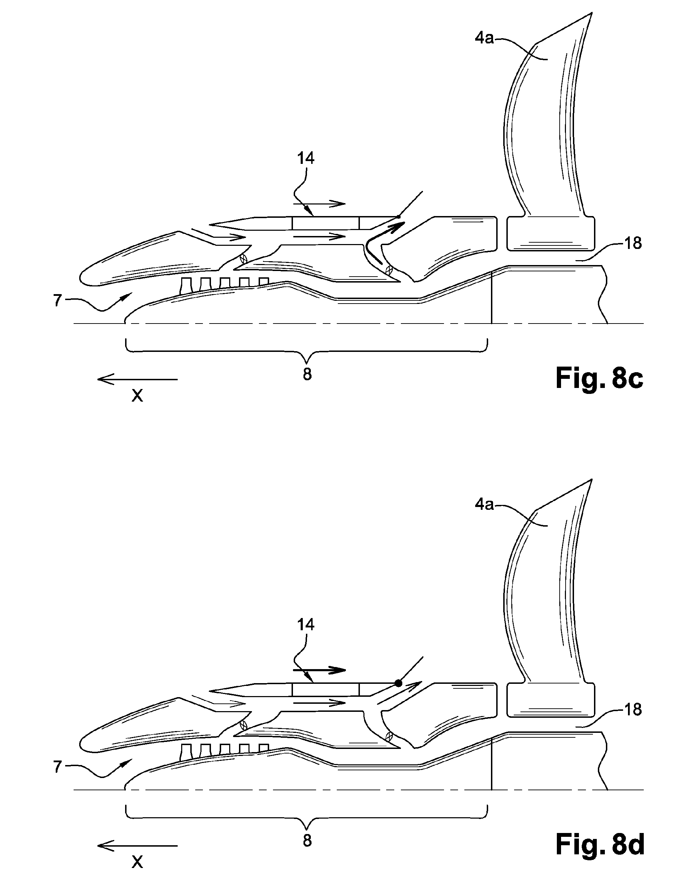

En fonctionnement lorsque l'aéronef est en phase basses vitesses (figures 8b et 8c), les réjections thermiques du générateur électrique sont très importantes et la vitesse de l'aéronef faible ou nulle.

Durant ces phases basses vitesses, le flux d'air extérieur est faible, et insuffisant pour un refroidissement par les deux moyens de refroidissement surfacique 145, 146. L'électronique de commande 19 pilote donc l'une des deux vannes de régulation 12, 12b, en position d'ouverture sensiblement maximale, permettant soit au second moyen de refroidissement 146 d'être parcouru par l'air extérieur et par l'air pressurisé prélevé au niveau du compresseur lorsque la vanne de régulation 12 est en position d'ouverture (figure 8b), soit de créer une aspiration de l'air extérieur en sortie du conduit d'air lorsque la vanne de régulation 12b est en position d'ouverture (figure 8c). Le refroidissement est fait principalement par le second moyen de refroidissement 146.

Ceci assure ainsi un échange thermique entre le refroidisseur 14 chaud et l'air pressurisé froid, provoquant le refroidissement souhaité du refroidisseur et des fluides circulant à l'intérieur ou reliés à lui par conduction thermique.

Au fur et à mesure de la montée et de l'évolution vers le vol en palier, la vitesse de l'aéronef augmente et la température extérieure de l'air diminue. En conséquence, le prélèvement d'air au niveau du compresseur est réduit par une fermeture progressive de la vanne de régulation 12 ou 12b commandée par l'électronique de contrôle 19, et le refroidissement se fait de plus en plus d'une part par le premier moyen de refroidissement surfacique 145 balayé par l'air extérieur et d'autre part par le second moyen de refroidissement surfacique 146 balayé par l'air extérieur circulant naturellement dans le conduit d'air 20.

La fermeture (par extension l'ouverture) des vannes 12, 12b est décrite pour être progressive mais il est également possible que la fermeture (par extension l'ouverture) des vannes soit commandée en tout ou rien.

Par la suite, lorsque l'aéronef est en vol stabilisé (figure 8d), le refroidissement est fait normalement par les premier et second moyen de refroidissement 145, 146 du refroidisseur 14, principalement par le premier moyen de refroidissement 145, et les vannes de régulation 12 et 12b restent alors fermées, ce qui supprime le prélèvement d'air sur le compresseur, et réduit donc la surconsommation de carburant qu'entraîne autrement ce prélèvement de puissance.

Dans une variante de réalisation, lorsque le conduit d'air 20 comporte un moyen de fermeture 30, l'électronique de commande 19 pilote préférentiellement le moyen de fermeture en position de fermeture lors des phases de vol. Le moyen de fermeture 30 en position de fermeture limite l'impact de trainée aérodynamique.

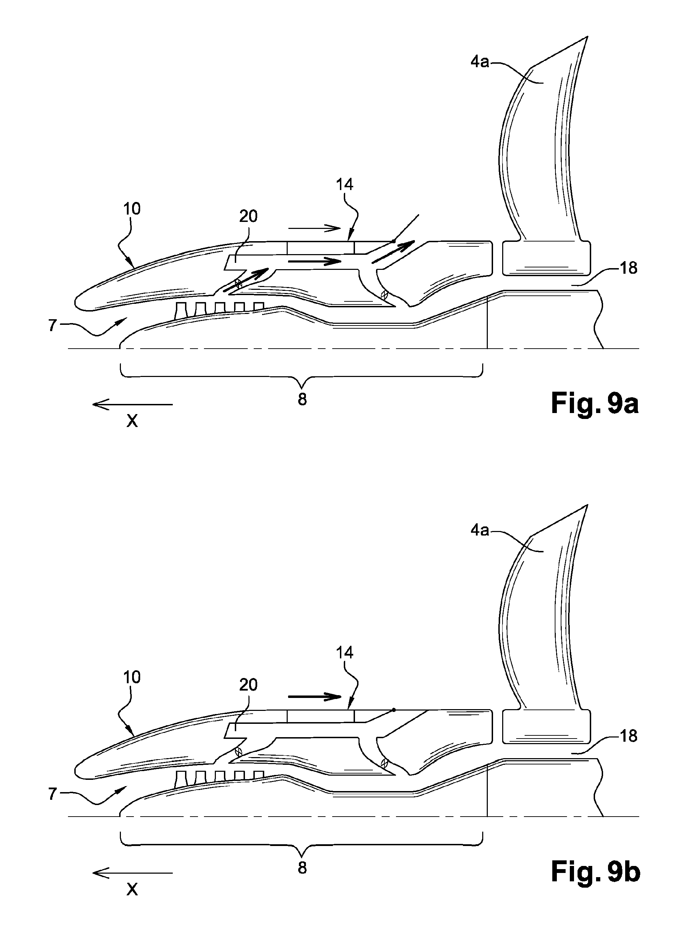

Dans une variante de réalisation, comme illustré sur les figures 9a et 9b, le conduit d'air 20 est non débouchant, par exemple au moyen d'un moyen de fermeture de l'entrée d'air 21, vers l'avant de la nacelle 10, de sorte à réduire la traînée aérodynamique induite par l'entrée d'air.

Dans cette variante de réalisation, que ce soit pour les phases basses vitesses ou en vol, la vanne de régulation 12b est toujours en position de fermeture.

Durant les phases basses vitesses (figure 9a), l'électronique de commande 19 pilote la vanne de régulation 12 en position d'ouverture sensiblement maximale et l'air froid pressurisé circule dans le conduit d'air 20. Les premier et second moyens de refroidissement sont fonctionnels. Lorsque le conduit d'air 20 comporte en outre un moyen de fermeture 30 de la sortie d'air 22, ledit moyen de fermeture est en position d'ouverture.

Durant la phase de vol (figure 9b), l'électronique de commande 19 pilote la vanne de régulation 12, en position de fermeture et le refroidissement est réalisé seulement par le premier moyen de refroidissement surfacique 145. Lorsque le conduit d'air 20 comporte en outre un moyen de fermeture 30 de la sortie d'air 22, ledit moyen de fermeture est de préférence en position de fermeture.

La portée de la présente invention ne se limite pas aux détails des formes de réalisation ci-dessus considérées à titre d'exemple, mais s'étend au contraire aux modifications à la portée de l'homme de l'art.

L'invention est décrite dans le cas d'un propulseur de type propfan, mais l'invention est aussi applicable à des propulseurs de type turbofan.

Il ressort de la description que le dispositif de refroidissement, permet de refroidir les composants moteur sur toutes les phases de vol tout en permettant l'utilisation d'échangeur surfacique pendant les phases de basse vitesse.

Le fait de gérer l'ouverture et la fermeture des vannes de régulation 12 et ou 12b lors de la phase basses vitesses et en cours de vol permet de piloter le prélèvement de puissance sur le compresseur, et de le réduire dans la mesure du possible, ce qui se traduit en une réduction de consommation.

Par ailleurs, la présente invention tire parti de la présence d'un échangeur surfacique, d'épaisseur inférieure à 6cm, en lieu et place d'un échangeur volumique, d'épaisseur supérieure à 15cm. Ceci se traduit par un encombrement réduit, un conduit d'air de hauteur réduite, ce qui limite les impacts de traînée aérodynamique d'une part et facilite son intégration sur le propulseur d'autre part.

## Revendications

1. Propulseur (1) pour aéronef comportant une turbomachine (8) logée dans une nacelle (10) et un refroidisseur (14) apte à être traversé par un fluide chaud destiné à être refroidi par échange thermique avec un air froid externe audit refroidisseur, le propulseur (1) comportant une veine d'air (13)(13b) apte à conduire un air pressurisé vers un conduit d'air (20) réalisé entre une paroi externe (6) et une paroi interne (60) de la nacelle (10), le refroidisseur (14) comportant :
- un premier moyen de refroidissement, dit premier moyen de refroidissement surfacique (145), sur une première face, dite face externe (141), disposée au niveau de la paroi externe (6) de la nacelle (10) du propulseur (1),
- un second moyen de refroidissement, dit second moyen de refroidissement surfacique (146), sur une seconde face, dite face interne (142), disposée au niveau d'une paroi (23) du conduit d'air (20),
**caractérisé en ce que** le conduit d'air (20) comporte une entrée d'air (21) disposée à l'avant du propulseur de sorte à créer une entrée d'air additionnelle.

2. Propulseur pour aéronef selon la revendication 1, **caractérisé en ce que** :
- le premier moyen de refroidissement surfacique (145) est dimensionné de manière à suffire à assurer le refroidissement souhaité lorsque l'aéronef est en vol, dans des conditions d'environnement et de vitesse préalablement choisies,
- le second moyen de refroidissement surfacique (146) est dimensionné de manière à suffire à assurer le refroidissement souhaité lorsque l'aéronef est à vitesse nulle ou faible, dans des conditions d'environnement préalablement choisies.

3. Propulseur pour aéronef selon l'une quelconque des revendications précédentes, **caractérisé en ce qu**'une prise d'air (11) est disposée au niveau d'un 1^{er} étage d'un compresseur d'air de la turbomachine (8) et en ce que la veine d'air associée (13) est débouchante en amont du refroidisseur (14).

4. Propulseur pour aéronef selon l'une des revendications 1 à 2, **caractérisé en ce qu**'une prise d'air (11b) est disposée en aval d'un compresseur d'air de la turbomachine (8) et en ce que la veine d'air associée (13b) est débouchante en aval du refroidisseur (14).

5. Propulseur pour aéronef suivant la revendication 4 **caractérisé en ce que** la veine d'air (13b) comporte, au niveau du conduit d'air (20), un éjecteur qui éjecte de l'air sous pression dans ledit conduit d'air (20).

6. Propulseur pour aéronef selon l'une des revendications 1 à 2, comportant deux veines d'air (13, 13b) et une vanne (12, 12b) associée à chaque veine, une veine d'air (13) débouchante en amont du refroidisseur (14) et une veine d'air (13b) débouchante en aval du refroidisseur, les vannes (12, 12b) régulant l'entrée d'air pressurisé suivant l'une ou l'autre veine.

7. Propulseur pour aéronef selon l'une quelconque des revendications précédentes, **caractérisé en ce que** au moins un parmi les premier (145) et second (146) moyens de refroidissement surfacique est un ensemble d'ailettes s'étendant à partir de la face externe/interne, et orientées principalement parallèlement au sens d'écoulement de l'air.

8. Propulseur pour aéronef selon l'une quelconque des revendications précédentes, **caractérisé en ce que** les premier et second moyens de refroidissement surfacique (145, 146) sont d'architecture similaire.

9. Aéronef comportant un propulseur selon l'une quelconque des revendications précédentes.
